# EUROPEAN PATENT APPLICATION

(11) **EP 4 510 315 A1**
(43) Date of publication of application: **19.02.2025**
(21) Application number: 23306395.7
(22) Date of filing: 18.08.2023
(51) Int. Cl.: H01M 50/103, H01M 50/15, H01M 50/655

(54) **BATTERY CELL WITH A SECURED ELECTROLYTE FILLING**

(71) Applicant: Automotive Cells Company SE, 33520 Bruges (FR)
(72) Inventor: CHOI, Hangjune, 33200 BORDEAUX (FR)
(74) Representative: Lavoix

(57) **Abstract**

The battery cell (10) comprises a casing (12) housing electrode stack(s) (13), and a top cover assembly, the top cover assembly comprising a top plate (14) having a filling hole (18) on it. The battery cell (10) comprises a funnel (26) arranged inside the casing (12) in regard to the filling hole (18).

## Description

The present invention relates to a battery, in particular a prismatic battery cell.

A battery cell from prior art is already known, comprising a casing and a top cover assembly having a filling hole. The filling hole is generally arranged in a top plate of the top cover assembly.

The filling hole is used for filling the cell with a liquid electrolyte then it is closed, for instance by inserting a plug, and then a cap is welded above the plug.

When filling the cell, the liquid electrolyte may splash and its droplets get adhered to an exposed area under the top plate.

The droplets in the exposed area of the top plate get evaporated by the heat supplied by welding the cap on the top plate. The evaporated gas increases the internal pressure of the cell inside and may explode burst/blow off the molten metal pool formed locally during the welding process and break the leak-tight sealing between the top plate and the cap, which is a serious failure of the process.

The invention is intended to solve this drawback, by providing a battery cell design with a portion in a specific shape for a more secure electrolyte filling.

To this end, the invention relates to a battery cell comprising a casing housing electrode stack(s), and a top cover assembly comprising a top plate having a filling hole on it, characterized in that the filling hole is provided with a funnel arranged inside the casing in regard to the filling hole.

The funnel allows better guiding of the electrolyte while filling the battery cell through the filing hole, and it prevents of the electrolyte from splashing into the wall of the top cover. Thus, when the cap is welded on the wall, heating this wall does not involve the evaporation of electrolyte droplets. The problem mentioned above is thus solved.

A battery cell according to the invention may comprise any of the following features, taken alone or in any possible combination.
- The funnel is a part of an insulation plate arranged under the top plate.
- At least one air passage is arranged in the insulation plate around the funnel.
- The funnel is frustoconical with a transversal cross-section that reduces from a lower position of the casing towards an upper position of the casing.
- The funnel is frustoconical with a transversal cross-section that reduces from an upper position of the casing towards a lower position of the casing.
- The battery cell comprises a sealing cap covering funnel, the sealing cap being welded to the top plate.
- The funnel has a central hole arranged in regard to the filling hole.
- The central hole has a diameter smaller or substantially equal to a diameter of the filling hole.
- The funnel is arranged with a gap between it and the top plate around the filling hole.

Several aspects and advantages of the invention will be enlightened in the following disclosure, only given as a non-limitative example and made in reference to attached drawings, in which:
- Figure 1 is a perspective view of a battery cell according to a first embodiment of the invention;
- Figure 2 is a perspective view of a funnel equipping the battery cell of Figure 1;
- Figure 3 is a sectional view of the battery cell of Figure 1, in a transversal plane including the funnel of Figure 2;
- Figure 4 is a perspective view of a funnel equipping the battery cell of Figure 1, according to a second embodiment;
- Figure 5 is a sectional view of a battery cell in a transversal plane including the funnel of Figure 4.

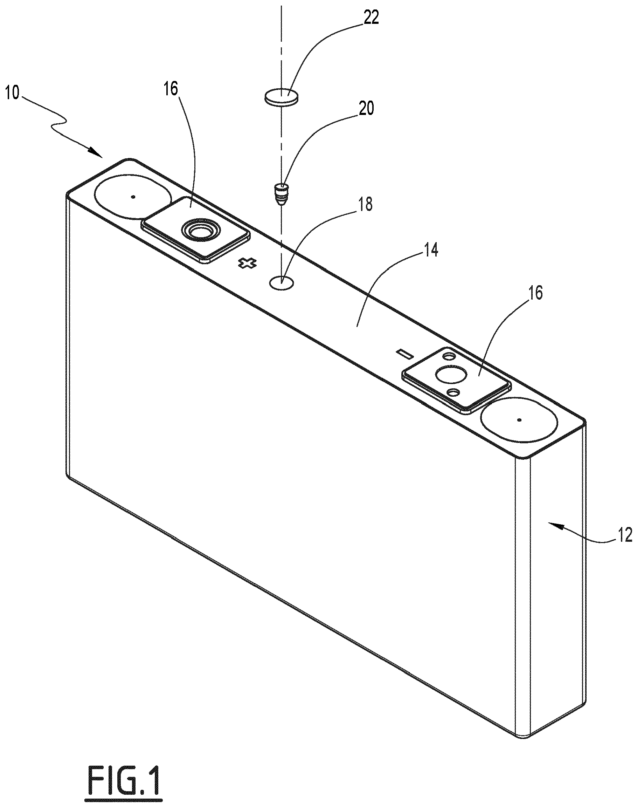

Figure 1 shows a battery cell 10 according to a first embodiment of the invention.

The battery cell 10 comprises a casing 12, for instance a metallic can. The casing 12 classically houses electrode stack(s) 13 and other parts/components of electrical/mechanical functions. A top cover assembly, including a top plate 14, is provided for closing and sealing the casing 12.

The top cover assembly comprises terminals 16 classically connected to the electrode stack(s) 13.

The top plate 14 comprises a filling hole 18, used for filling the casing with an electrolyte 19.

In order to close the filling hole 18 after filling, the battery cell 10 comprises a plug 20 intended to be inserted in the filling hole 18 for sealing temporarily, until it becomes permanently sealed by welding a cap 22.

The cap 22 is intended to cover the plug 20 and to seal the filing hole 18 permanently, by welding to the top plate 14. The cap 22 has for example a shape of a disc.

Preferentially, the top plate 14 comprises a recess 24 surrounding the edge of the filling hole 18, intended to receive the cap 22. The recess 24 preferentially has similar dimensions as the cap 22 for slide fitting.

The battery cell 10 comprises a funnel 26, in regard to the filling hole 18, arranged in an interior of the casing 12. For instance, the funnel 26 is a part of an insulation plate 28 arranged under the top plate 14.

The funnel 26 comprises a central hole 29, preferentially coaxial with the filling hole 18. The central hole 29 preferentially has a diameter substantially equal to the diameter of the filling hole 18. In a variant, the central hole 29 has a diameter smaller than the diameter of the filing hole 18.

At least one air passage 30 is arranged in the insulation plate 28, around the funnel 26. Preferentially, a plurality of air passages 30 are arranged around the funnel 26.

The air passages 30 allow the air exiting from the interior of the battery cell when the battery cell is filled with electrolyte.

There is also a gap 31 between the filling hole 18 and the funnel 26 to allow the air to exit through this gap.

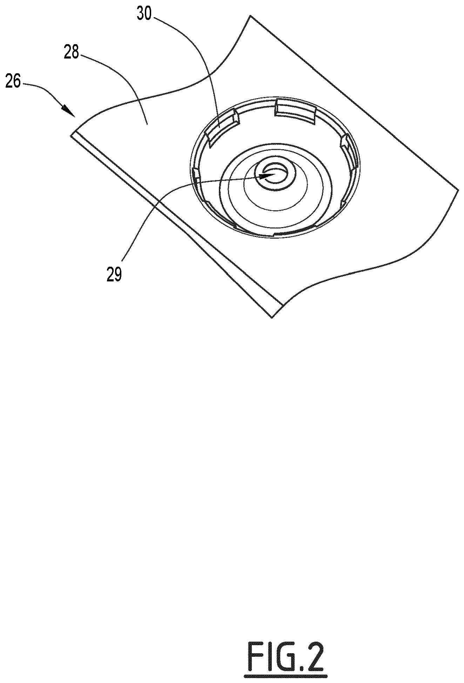

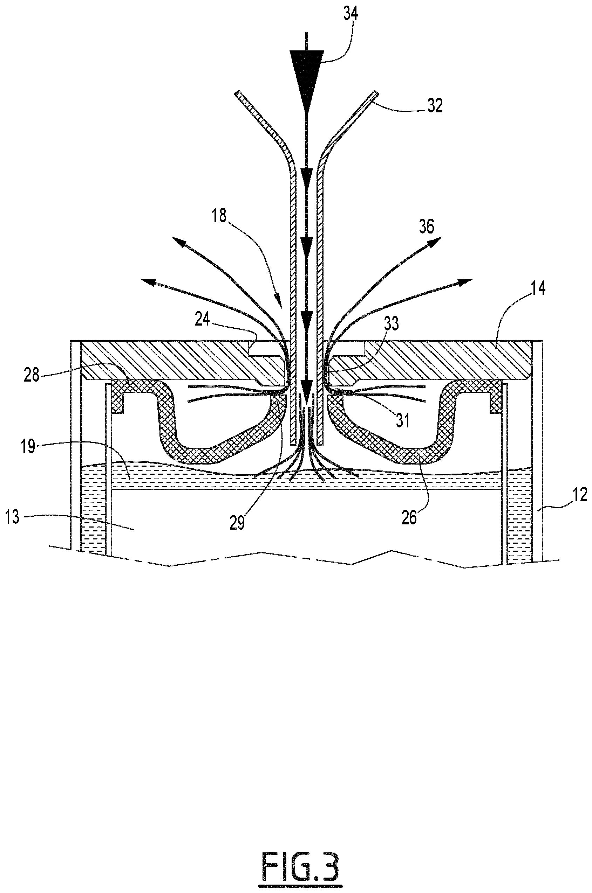

In the first embodiment, shown on Figures 2 and 3, the funnel 26 is frustoconical, with a transversal cross-section that reduces from the lower position of the casing 12 towards the upper position of the casing 12. In other words, the central hole 29 is the part of the funnel 26 the closest of the filling hole 18.

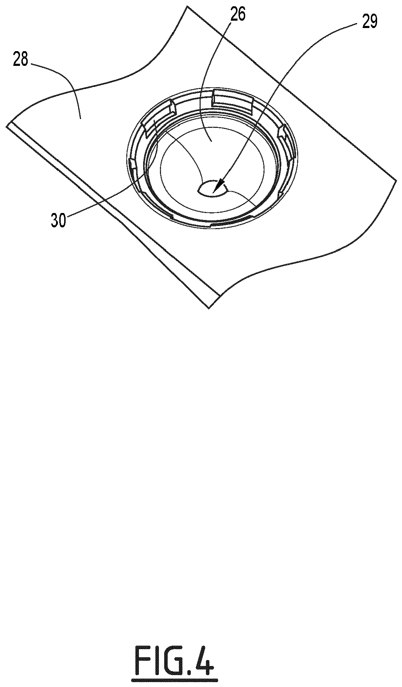

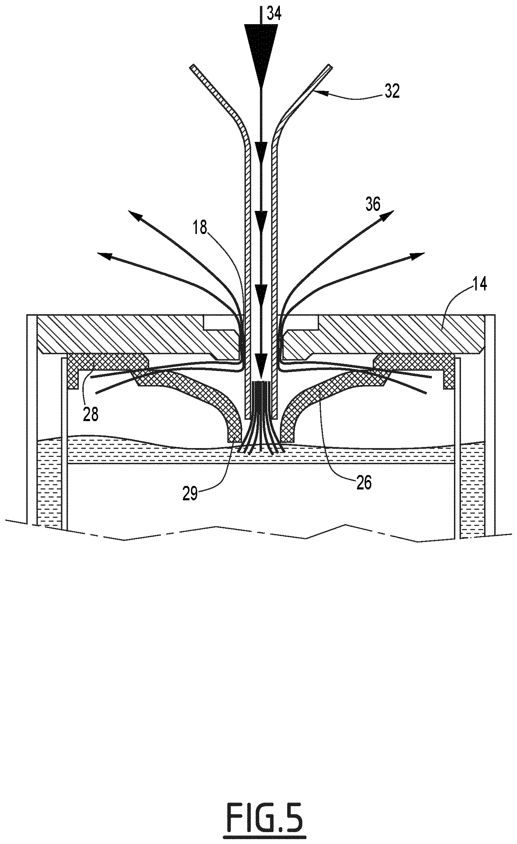

In the second embodiment, shown on Figures 4 and 5, the funnel 26 is frustoconical, with a transversal cross-section that reduces from the upper position of the casing 12 towards the lower position of the casing 12. In other words, the central hole 29 is the part of the funnel 26 the furthest from the filling hole 18 in a vertical direction.

A method of manufacturing the battery cell 10 will now be disclosed.

First, the battery cell 10 is assembled in a classical manner. The electrode stack(s) 13 are wrapped in an insulation sock and inserted inside the casing 12. Tabs of the electrode stack(s) 13 are connected to collectors, and the top cover assembly with the top plate 14 is assembled with the casing 12. The collectors are connected to the terminals 16 of the top cover assembly.

The top cover assembly is fixed to the casing 12 at the periphery of the top plate 14. This fixation is made hermetical, for instance by welding.

The casing 12 is then filled with electrolyte 19 through the filling hole 18.

To this end, a nozzle 32 is inserted through the filling hole 18 and the central hole 29. The nozzle 32 has a diameter inferior to the diameter of the filling hole, forming a second gap 33 allowing the air to exit from the interior of the casing 12. The electrolyte 19 is then injected into the casing 12 by means of the nozzle 32 (see the arrows 34).

The air from the interior of the casing 12 (arrows 36 on figures 3 and 5) exits through the air passages 30, the gap 31 between the filling hole 18 and the funnel 26, and the second gap 33 between the nozzle 32 and edges of the filling hole 18.

Because of the insulation plate 28 and the funnel 26, electrolyte droplets do not reach the top plate 14.

A vacuum is then made inside the casing 12, by means of a vacuum chamber in which the battery cell 10 is arranged.

In order to keep the vacuum in the casing 12, the filling hole 18 is closed temporarily.

To this end, the plug 20 is inserted in the filling hole 18.

The cap 22 is then welded in the recess 24 to the top plate 14, in order to complete the hermetic closing.

It appears that the invention allows a secured filling of the electrolyte with no droplet splashed on the top plate 14.

### Reference numbers:

- 10: - Battery cell
- 12: - Casing/can
- 13: - Electrode stack
- 14: - Top plate
- 16: - Terminals
- 18: - Filling hole
- 19: - Electrolyte
- 20: - Plug
- 22: -Cap
- 24: - Recess
- 26: - Funnel
- 28: - Insulation plate
- 29: - Central hole
- 30: - Air passage
- 31: - Gap
- 32: - Nozzle
- 33: - Second gap
- 34: - Injected Electrolyte
- 36: - Exiting airflow

## Claims

1. A battery cell (10) comprising a casing (12) housing electrode stack(s) (13), and a top cover assembly comprising a top plate (14) having a filling hole (18) on it, **characterized in that** the filling hole (18) is provided with a funnel arranged inside the casing (12) in regard to the filling hole (18).

2. The battery cell (10) of claim 1, wherein the funnel (26) is a part of an insulation plate (28) arranged under the top plate (14).

3. The battery cell (10) of claim 2, wherein at least one air passage (30) is arranged in the insulation plate (28) around the funnel (26).

4. The battery cell (10) of any of claims 1 to 3, wherein the funnel (26) is frustoconical with a transversal cross-section that reduces from a lower position of the casing (12) towards an upper position of the casing (12).

5. The battery cell (10) of any of claims 1 to 3, wherein the funnel (26) is frustoconical with a transversal cross-section that reduces from an upper position of the casing (12) towards a lower position of the casing (12).

6. The battery cell (10) of any of the preceding claims, comprising a sealing cap (22) covering funnel, the sealing cap (22) being welded to the top plate (14).

7. The battery cell (10) of any of the preceding claims, wherein the funnel (26) has a central hole (29) arranged in regard to the filling hole (18).

8. The battery cell (10) of claim 7, wherein the central hole (29) has a diameter smaller or substantially equal to a diameter of the filling hole (18).

9. The battery cell (10) of any of the preceding claims, wherein the funnel (26) is arranged with a gap (31) between it and the top plate (14) around the filling hole (18).

## Amended claims

### Amended claims in accordance with Rule 137(2) EPC.

1. A battery cell (10) comprising a casing (12) housing electrode stack(s) (13), and a top cover assembly comprising a top plate (14) having a filling hole (18) on it, wherein the filling hole (18) is provided with a funnel arranged inside the casing (12) in regard to the filling hole (18), **characterized in that** the funnel (26) is a part of an insulation plate (28) arranged under the top plate (14).

2. The battery cell (10) of claim 1, wherein at least one air passage (30) is arranged in the insulation plate (28) around the funnel (26).

3. The battery cell (10) of any of claims 1 or 2, wherein the funnel (26) is frustoconical with a transversal cross-section that reduces from a lower position of the casing (12) towards an upper position of the casing (12).

4. The battery cell (10) of any of claims 1 or 2, wherein the funnel (26) is frustoconical with a transversal cross-section that reduces from an upper position of the casing (12) towards a lower position of the casing (12).

5. The battery cell (10) of any of the preceding claims, comprising a sealing cap (22) covering funnel, the sealing cap (22) being welded to the top plate (14).

6. The battery cell (10) of any of the preceding claims, wherein the funnel (26) has a central hole (29) arranged in regard to the filling hole (18).

7. The battery cell (10) of claim 6, wherein the central hole (29) has a diameter smaller or substantially equal to a diameter of the filling hole (18).

8. The battery cell (10) of any of the preceding claims, wherein the funnel (26) is arranged with a gap (31) between it and the top plate (14) around the filling hole (18).
